# EUROPÄISCHE PATENTSCHRIFT

(11) **EP 1 698 506 B1**
(45) Veröffentlichungstag und Bekanntmachung des Hinweises auf die Patenterteilung: **21.04.2010**
(21) Anmeldenummer: 06002894.1
(22) Anmeldetag: 14.02.2006
(51) Int. Cl.: B60K 6/383, B60K 6/48, F16D 43/18, F16D 27/102

(54) **Antriebseinheit für ein Hybridfahrzeug**
Driving unit for a hybrid vehicle
Unité d'entrainement pour un véhicule hybride

(30) Priorität: 02.03.2005 DE 102005009446
(43) Veröffentlichungstag der Anmeldung: 06.09.2006
(73) Patentinhaber: MTU FRIEDRICHSHAFEN GMBH, 88045 Friedrichshafen (DE)
(72) Erfinder: Groddeck, Michael, 88074 Meckenbeuren (DE); Huster, Joachim, 88048 Friedrichshafen (DE)

(56) Entgegenhaltungen:
- EP-A- 1 449 699
- DE-A1- 19 941 705
- FR-A- 2 450 382
- FR-A- 2 782 958
- US-A1- 2002 045 508

## Beschreibung

Die Erfindung betrifft eine Antriebseinheit für ein Hybridfahrzeug zur Koppelung einer Brennkraftmaschine und/oder einer Elektromaschine mit einem Getriebe nach dem Oberbegriff von Anspruch 1 sowie ein entsprechend angepasstes Steuerungsverfahren.

Aus der DE 43 23 601 A1 ist eine Antriebseinheit für ein Hybridfahrzeug bekannt, welche eine Eingangswelle, eine Einscheiben-Trockenkupplung, eine Ausgangswelle und einen Starter-Generator enthält. Die Eingangswelle wird von der Brennkraftmaschine angetrieben. Innerhalb der Antriebseinheit ist die Eingangswelle mit der Primärseite der Kupplung verbunden. Die Ausgangswelle führt auf das Getriebe. Innerhalb der Antriebseinheit ist die Ausgangswelle mit der Sekundärseite der Kupplung und dem Starter-Generator verbunden. Bei geschlossener Kupplung besteht ein Kraftfluss von der Brennkraftmaschine über die Eingangswelle und die Kupplung auf die Ausgangswelle. Der Schaltzustand der Kupplung wird über einen Ausrückstößel, ein Ausrücklager und eine in axialer Richtung wirkende Schließfeder bestimmt. Bei der elektromotorischen Betriebsweise muss die Kupplung deaktiviert sein, um die Brennkraftmaschine vom Starter-Generator zu entkoppeln. Hierzu muss die Schließfeder im nichtschließenden Zustand gehalten werden, d. h. über den Ausrückstößel und das Ausrücklager muss eine entsprechend hohe, permanent wirkende Kraft aufgebracht werden. Ebenfalls kritisch ist die Verwendung von Einscheiben- sowie Zweischeiben-Trockenkupplungen für Hybridfahrzeuge mit einem hohen Momentenangebot durch die Brennkraftmaschine, zum Beispiel größer 1000 Nm. Eine Einscheiben-Trockenkupplung zur Übertragung dieser hohen Momente verursacht einen sehr hohen Bauraumbedarf mit einer entsprechenden Gewichtszunahme.

Aus der gattungsbildende FR 2 450 382 A ist eine Antriebseinheit für ein Hybridfahrzeug zur Koppelung einer Brennkraftmaschine sowie einer Elektromaschine mit einem Getriebe bekannt. In der Antriebseinheit angeordnet sind eine Eingangswelle, welche drehfest mit der Brennkraftmaschine verbunden ist, eine Ausgangswelle, welche drehfest mit dem Getriebe verbunden ist, eine fliehkraftunterstützte Kupplung und ein Elektromagnet. An der Ausgangswelle ist eine Riemenscheibe mit einem sich in axialer Richtung erstreckenden topfartigen Fortsatz einstückig ausgebildet. Die innere Umfangsfläche des topfartigen Fortsatzes bildet die Anlagefläche für die Kupplung. Die Elektromaschine dient zugleich als Starter-Generator, wobei der Starter-Generator sowie die Brennkraftmaschine auf die Ausgangswelle wirken. Zum Starten der Brennkraftmaschine wird der Elektromagnet bestromt. Mit zunehmender Drehzahl der Brennkraftmaschine beginnt sich die fliehkraftunterstützte Kupplung zu schließen, indem deren Reibbelag an der inneren Umfangsfläche des topfartigen Fortsatzes zur Anlage kommt. Im verbrennungsmotorischen Betrieb ist die Brennkraftmaschine über die jetzt geschlossene Kupplung mit der Ausgangswelle gekoppelt. Bauartbedingt kann die Kupplung nur kleine Momente übertragen und unterliegt der Belag einem hohen Verschleiß.

Aus der US 2002/0045508 A1 ist eine Antriebseinheit zur Momentübertragung zwischen einer Brennkraftmaschine und einem Starter-Generator bekannt. Innerhalb der Antriebseinheit sind ein Planetengetriebe und zwei fliehkraftunterstützte Bandfreiläufe angeordnet. Über die Bandfreiläufe werden die Übersetzungen des Planetengetriebes drehzahlabhängig eingestellt. So wird in einem ersten Modus zum Anlassen der Brennkraftmaschine die hohe Drehzahl des Starter-Generators ins Langsame übersetzt, indem über den ersten Bandfreilauf das Hohlrad festgesetzt wird. Bei sich erhöhender Drehzahl der Brennkraftmaschine wird in einen zweiten Modus gewechselt, indem auf Grund der Zentrifugalkraft der erste Bandfreilauf das Hohlrad freigibt und der zweite Bandfreilauf das Planetengetriebe verblockt. Im zweiten Modus beträgt die Übersetzung Eins. Der zweite Modus entspricht dem verbrennungsmotorischen Betrieb, während dem der Starter-Generator als Generator arbeitet.

Der Erfindung liegt daher die Aufgabe zu Grunde, die Antriebseinheit im Hinblick auf eine hohe Moment-Übertragungsfähigkeit bei moderater Bauraumzunahme weiter zu entwickeln.

Die Aufgabe wird durch die Merkmale von Anspruch 1 sowie ein entsprechend angepasstes Steuerungsverfahren nach Anspruch 8 gelöst. Die Ausgestaltungen sind in den Unteransprüchen dargestellt.

Die fliehkraftunterstützte Kupplung umfasst als mechanische Komponenten eine erste Scheibe, welche drehfest mit der Eingangswelle verbunden ist, eine zweite Scheibe, Reibkeile zur reibschlüssigen Verbindung der ersten Scheibe mit der zweiten Scheibe, Federn und Stehbolzen. Die Reibkeile stützen sich über die Federn und Stehbolzen auf der Eingangswelle ab, wodurch die Fliehkraftunterstützung dargestellt wird.

Als elektromagnetische Komponenten umfasst die Kupplung ortsfest Zugmagnete zur Erzeugung eines elektromagnetischen Felds und hierzu korrespondieren magnetisierbare Segmente, welche auf jedem Reibkeil angeordnet sind. Über eine Bestromung der Zugmagnete wird die Kraftwirkung der Federn aufgehoben, wodurch der Reibkeil mit der ersten Scheibe und der zweiten Scheibe in Eingriff gebracht wird, d. h. die Kupplung wird geschlossen.

Die Erfindung ist in der Art ausgeführt, dass keine Hilfsenergie erforderlich ist um die Kupplung im geöffneten oder geschlossenen Zustand zu halten. Lediglich zum Schließen der Kupplung müssen die Zugmagnete mit einer elektrischen Spannung beaufschlagt werden.

Zum Starten der Brennkraftmaschine werden der Starter-Generator und die Zugmagnete bestromt, wodurch die Kupplung geschlossen wird und die Brennkraftmaschine mit dem Starter-Generator gekoppelt wird. Erreicht die Drehzahl der Brennkraftmaschine einen Drehzahl-Grenzwert von z. B. 240 Umdrehungen/Minute, so werden die Zugmagnete deaktiviert. Mit Überschreiten des Drehzahl-Grenzwerts ist die Fliehkraft auf die Reibkeile so groß, dass eine reibschlüssige Verbindung von der ersten auf die zweite Scheibe über die Reibkeile besteht. Im verbrennungsmotorischen Fahrbetrieb wird die Kupplung über die Fliehkraft, welche auf die Reibkeile wirkt, sicher im geschlossenen Zustand gehalten.

Um vom verbrennungsmotorischen Fahrbetrieb in den elektromotorischen Fahrbetrieb überzugehen, wird die Drehzahl der Brennkraftmaschine bis zum Drehzahl-Grenzwert abgesenkt. Bei dieser ist die Zentripetalkraft auf die Reibkeile größer als die Fliehkraft. Die Reibkeile sind dann nicht mehr im Eingriff, d. h. die Kupplung ist geöffnet. Danach wird der Starter-Generator bestromt. Zum Wiederstarten der Brennkraftmaschine bei aktiviertem elektromotorischem Antrieb wird die Drehzahl des Starter-Generators bis zum Drehzahl-Grenzwert reduziert und danach die Zugmagnete bestromt, wodurch die Kupplung schließt.

Ein weiterer wesentlicher Vorteil der Erfindung besteht darin, dass lediglich beim Starten der Brennkraftmaschine die Kupplung schaltbar sein muss. Das hierbei zu übertragende Differenzmoment ist jedoch wesentlich geringer als das maximale Motormoment. Die Schalteinrichtung der Kupplung, d. h. die Zugmagnete, baut daher klein. Durch die Verwendung von Standard-Bauteilen kann die Erfindung kostengünstig umgesetzt werden.

In den Zeichnungen ist ein bevorzugtes Ausführungsbeispiel dargestellt. Es zeigen:
- Fig. 1: ein Schnittbild der Antriebseinheit und
- Fig. 2: ein Schnittbild aus der Figur 1 entlang der Linie II/II

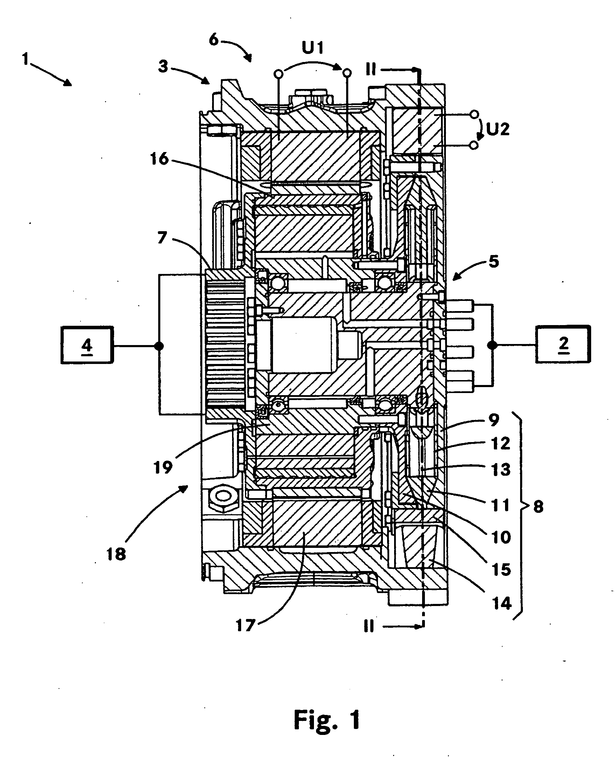

In der Figur 1 ist eine Antriebseinheit 1 für ein Hybridfahrzeug zur Koppelung einer Brennkraftmaschine 2 und/oder Elektromaschine 3 mit einem Getriebe 4 dargestellt. Innerhalb der Antriebseinheit 1 sind folgende Baugruppen angeordnet: eine Eingangswelle 5, eine Kupplung 8, ein Starter-Generator 6, welcher der Elektromaschine 3 entspricht, eine metallelastische Kupplung 18 und eine Ausgangswelle 7. Die Kupplung 8 besteht aus folgenden mechanischen Komponenten: eine erste Scheibe 9, eine zweite Scheibe 10, mehrere Reibkeile 11, Federn 12 und Stehbolzen 13. Jeder Reibkeil 11 stützt sich über Federn 12 und Stehbolzen 13 auf der Eingangswelle 5 ab. Der elektromagnetische Teil der Kupplung 8 besteht aus magnetisierbaren Segmenten 15 und Zugmagneten 14. Die Segmente 15 sind am äußeren Umfang der Reibkeile 11 angeordnet, siehe untere Hälfte der Figur 1.

Die Eingangswelle 5 ist drehfest mit der Brennkraftmaschine 2 und der ersten Scheibe 9 der Kupplung 8 verbunden. Die zweite Scheibe 10 der Kupplung 8 ist drehfest mit einer Welle 19 verschraubt. Die Welle 19 entspricht dem Innenstern der metallelastischen Kupplung 18, zum Beispiel einer Geislinger-Kupplung. Über die metallelastische Kupplung 18 wird das Moment der Welle 19 auf einen Rotor 16 des Starter-Generators 6 übertragen bzw. das Moment des Rotors 16 auf die Welle 19. Der in der Figur 1 dargestellte Starter-Generator 6 besteht aus einem ortsfesten Stator 17 und dem drehbaren Rotor 16, hier einem Innenläufer. Der Rotor 16 ist drehfest mit der Ausgangswelle 7 verbunden.

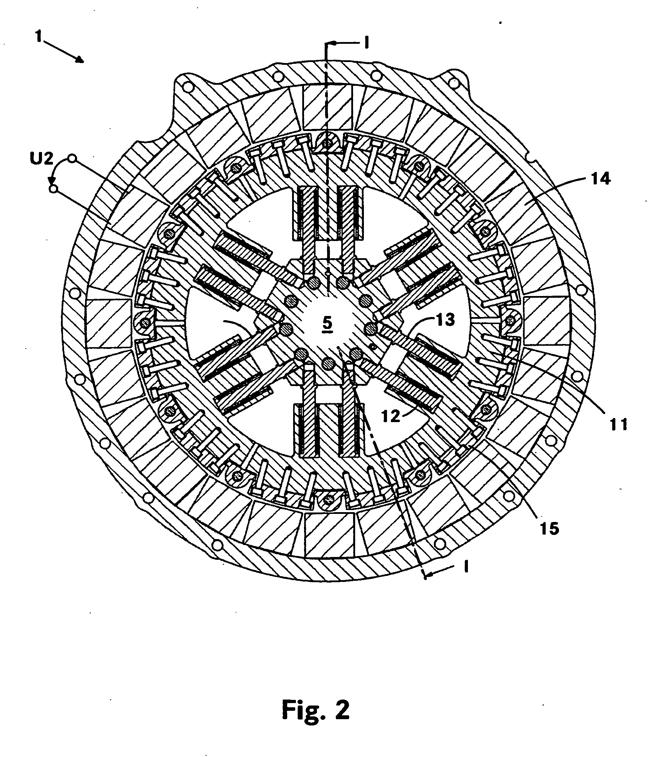

In Figur 2 ist ein Schnittbild der Antriebseinheit 1 entsprechend der Schnittlinie II/II der Figur 1 dargestellt. Bei dieser Darstellung sind sechs Reibkeile 11 ersichtlich. Jeder Reibkeil 11 stützt sich über zwei Federn 12 und zwei Stehbolzen 13 an der Eingangswelle 5 ab. Am äußeren Umfang jedes Reibkeils 11 sind die magnetisierbaren Segmente 15 angeordnet, z. B. indem diese mit dem jeweiligen Reibkeil 11 verschraubt sind. Zu den Segmenten 15 korrespondieren die Zugmagnete 14. Die Zugmagnete 14 und die Segmente 15 bilden einen elektromagnetischen Kreis. Wird an den Zugmagneten 14 eine Spannung U2 angelegt, so wird über die Segmente 15 eine radial wirkende Kraft auf die Reibkeile 11 ausgeübt. Über die Federn 12 wird eine zentripetale Kraft auf die Reibkeile 11 ausgeübt. In der Figur 2 ist eine Schnittlinie I/I eingezeichnet. Dieser Schnittlinie entspricht die Darstellung der Figur 1.

### Die Antriebseinheit 1 besitzt folgende Funktionalität:

Im Ausgangszustand sind der Starter-Generator 6 und die Brennkraftmaschine 2 deaktiviert. Die Kupplung 8 ist geöffnet, indem die Federn 12 auf die Reibkeile 11 eine Zentripetalkraft in Richtung des Drehmittelpunkts der Eingangswelle 5 ausüben. Zwischen der ersten Scheibe 9 und der zweiten Scheibe 10 besteht kein Kraftschluss.

Zum Starten der Brennkraftmaschine 2 werden am Stator 17 eine Spannung U1 und an den Zugmagneten 14 die Spannung U2 angelegt. Die Spannung U1 bewirkt, dass sich der Rotor 16, die metallelastische Kupplung 18, die Ausgangswelle 7, die Welle 19 und die zweite Scheibe 10 zu drehen beginnen. Aufgrund der Spannung U2 bildet sich zwischen den Zugmagneten 14 und den Segmenten 15 ein elektromagnetisches Feld, welches eine radial gerichtete Kraft auf die Reibkeile 11 ausübt. Hierdurch werden die Reibkeile 11 in Reibschluss mit der ersten Scheibe 9 und der zweiten Scheibe 10 gebracht, d. h. die Kupplung 8 schließt. Bei geschlossener Kupplung 8 wird das vom Starter-Generator 6 erzeugte Moment über die Eingangswelle 5 auf die Brennkraftmaschine 2 übertragen. Die Brennkraftmaschine 2 beginnt sich zu drehen. Erreicht die Drehzahl der Brennkraftmaschine 2 einen Drehzahl-Grenzwert nGW, z. B. 240 Umdrehungen/Minute, so werden die Zugmagnete 14 deaktiviert. Bei diesem Drehzahl-Grenzwert nGW ist die Zentrifugalkraft auf die Reibkeile 11 größer als die Zentripetalkraft durch die Federn 12. Der Drehzahl-Grenzwert nGW kann daher durch die Auslegung der Federn 12 festgelegt werden. Oberhalb des Drehzahl-Grenzwerts nGW ist die Kupplung 8 sicher geschlossen, da die Zentrifugalkraft auf die Reibkeile 11 eine sichere Momentenübertragung gewährleistet. Nachdem die Brennkraftmaschine 2 befeuert wird und eine Leerlaufdrehzahl nLL, z. B. 700 Umdrehungen/Minute, erreicht hat, wird der Starter-Generator 6 deaktiviert und als Generator betrieben.

Im verbrennungsmotorischen Betrieb wird die Leistung der Brennkraftmaschine 2 über die Eingangswelle 5, geschlossene Kupplung 8, metallelastische Kupplung 18 und Rotor 16 auf die Ausgangswelle 7 übertragen.

Beim Übergang vom verbrennungsmotorischen Antrieb auf den elektromotorischen Antrieb wird die Drehzahl der Brennkraftmaschine 2 bis zum Drehzahl-Grenzwert nGW abgesenkt. Unterhalb diesem überwiegt die Zentripetalkraft durch die Federn 12 auf die Reibkeile 11, d. h. die Kupplung 8 bleibt geöffnet. Danach wird der Starter-Generator 6 bestromt, wodurch der Rotor 16 ein Moment auf die Ausgangswelle 7 überträgt, und die Brennkraftmaschine 2 deaktiviert.

Zum Wiederstarten der Brennkraftmaschine 2 bei aktiviertem elektromotorischem Antrieb wird die Drehzahl des Starter-Generators 6 bis zum Drehzahl-Grenzwert nGW abgesenkt. Danach wird der zuvor beschriebene Startvorgang eingeleitet.

Bei geschlossener Kupplung 8 ist selbstverständlich auch ein Parallelbetrieb von Brennkraftmaschine 2 und Elektromaschine 3 möglich.

Bei der Beschreibung der Figur 1 und 2 wird über die Federn 12 eine zentripetale Kraft und über die Zugmagnete bei Bestromung eine zentrifugale Kraft auf die Reibkeile 11 ausgeübt. Dieses Wirkprinzip kann auch umgekehrt werden, d. h. über die Federn 12 werden dann die Reibkeile 11 in Eingriff gebracht und über die Bestromung der Zugmagnete 14 wird diese Kraftwirkung aufgehoben.

Aus der vorhergehenden Beschreibung ergeben sich für die Erfindung folgende Vorteile:
- die Kupplung 8 muss lediglich das Differenzmoment zum Starten der Brennkraftmaschine übertragen, wodurch diese klein baut;
- auch hohe Momente der Brennkraftmaschine werden durch die Kupplung 8 sicher übertragen, da diese fliehkraftunterstützt ist;
- da Standardbauteile verwendet werden, kann die Erfindung kostengünstig umgesetzt werden;
- es ist keine Hilfsenergie erforderlich um die Kupplung 8 in geöffnetem oder geschlossenem Zustand zu halten.

### Bezugszeichen

- 1: Antriebseinheit
- 2: Brennkraftmaschine
- 3: Elektromaschine
- 4: Getriebe
- 5: Eingangswelle
- 6: Starter-Generator
- 7: Ausgangswelle
- 8: Kupplung
- 9: erste Scheibe
- 10: zweite Scheibe
- 11: Reibkeil
- 12: Feder
- 13: Stehbolzen
- 14: Zugmagnete
- 15: Segment
- 16: Rotor
- 17: Stator
- 18: metallelastische Kupplung
- 19: Welle

## Patentansprüche

1. Antriebseinheit (1) für ein Hybridfahrzeug zur Koppelung einer Brennkraftmaschine (2) und/oder Elektromaschine (3) mit einem Getriebe (4) mit einer Eingangswelle (5), welche drehfest mit der Brennkraftmaschine (2) verbunden ist, mit einem Starter-Generator (6), welcher zugleich als Elektromaschine (3) dient, mit einer Ausgangswelle (7), welche drehfest mit dem Getriebe (4) verbunden ist, wobei der Starter-Generator (6) sowie die Brennkraftmaschine (2) auf die Ausgangswelle (7) wirken, und mit einer Kupplung (8) zur Koppelung des Starter-Generators (6) mit der Brennkraftmaschine (2), wobei die Kupplung (8) fliehkraftunterstützt ist,
**dadurch gekennzeichnet,**
**dass** die Kupplung (8) als mechanische Komponenten eine erste Scheibe (9), welche drehfest mit der Eingangswelle (5) verbunden ist, eine zweite Scheibe (10), Reibkeile (11) zur reibschlüssigen Verbindung der ersten Scheibe (9) mit der zweiten Scheibe (10), Federn (12) und Stehbolzen (13) umfasst.

2. Antriebseinheit (1) nach Anspruch 1,
**dadurch gekennzeichnet,**
**dass** sich jeder Reibkeil (11) über Federn (12) und Stehbolzen (13) auf der Eingangswelle (5) abstützt.

3. Antriebseinheit (1) nach Anspruch 2,
**dadurch gekennzeichnet,**
**dass** der Reibkeil (11), die Federn (12) und die Stehbolzen (13) in der Art zusammenwirken, dass bei einer Drehzahl der Eingangswelle (5) unterhalb eines Drehzahl-Grenzwerts (nGW) die Reibkeile (11) nicht im Reibschluss mit der ersten Scheibe (9) und zweiten Scheibe (10) stehen.

4. Antriebseinheit (1) nach einem der vorausgegangenen Ansprüche,
**dadurch gekennzeichnet,**
**dass** die Kupplung (8) als elektromagnetische Komponenten ortsfeste Zugmagnete (14) zum Erzeugen eines elektromagnetischen Felds und magnetisierbare Segmente (15) umfasst.

5. Antriebseinheit (1) nach Anspruch 4,
**dadurch gekennzeichnet,**
**dass** jeder Reibkeil (11) am äußeren Umfang ein Segment (15) trägt.

6. Antriebseinheit (1) nach den Ansprüchen 4 und 5,
**dadurch gekennzeichnet,**
**dass** die Zugmagnete (14) und die Segmente (15) in der Art zusammenwirken, dass bei Bestromung der Zugmagnete (14) die Kraftwirkung der Federn (12) aufgehoben wird und der Reibkeil (11) mit der ersten Scheibe (9) und zweiten Scheibe (10) in Eingriff gebracht wird.

7. Antriebseinheit (1) nach einem der vorausgegangenen Ansprüche,
**dadurch gekennzeichnet,**
**dass** ein Rotor (16) des Starter-Generators (6) drehfest mit der Ausgangswelle (7) und über eine metallelastische Kupplung (18) mit der Kupplung (8) verbunden ist.

8. Verfahren zur Steuerung einer nach den Patentansprüchen 1 bis 7 ausgeführten Antriebseinheit (1),
**dadurch gekennzeichnet,**
**dass** zum Starten der Brennkraftmaschine (2) der Starter-Generator (6) und die Zugmagnete (14) aktiviert werden, wodurch der Starter-Generator (6) über die Kupplung (8) mit der Brennkraftmaschine (2) gekoppelt wird und mit Erreichen eines Drehzahl-Grenzwerts (nGW) der Brennkraftmaschine (2) die Zugmagnete (14) deaktiviert werden, beim Übergang vom verbrennungsmotorischen Betrieb in den elektromotorischen Betrieb in einem ersten Schritt die Drehzahl der Brennkraftmaschine (2) bis zum Drehzahl-Grenzwert (nGW) abgesenkt wird, wodurch die Kupplung (8) öffnet, und in einem zweiten Schritt der Starter-Generator (6) aktiviert wird, zum Wiederstarten der Brennkraftmaschine (2) bei aktiviertem elektromotorischem Betrieb in einem ersten Schritt die Drehzahl des Starter-Generators (6) auf den Drehzahl-Grenzwert (nGW) abgesenkt wird, in einem zweiten Schritt die Zugmagnete (14) bestromt werden, wodurch die Kupplung (8) schließt, und wenn die Brennkraftmaschine (2) den Drehzahl-Grenzwert (nGW) erreicht hat in einem dritten Schritt die Zugmagnete (14) deaktiviert werden.

## Claims

1. Drive unit (1) for a hybrid vehicle for coupling an internal combustion engine (2) and/or electric machine (3) to a gearbox (4) with an input shaft (5) which is connected in a rotationally fixed fashion to the internal combustion engine (2), with a starter generator (6) which serves at the same time as an electric machine (3), with an output shaft (7) which is connected in a rotationally fixed fashion to the gearbox (4), wherein the starter generator (6) and the internal combustion engine (2) act on the output shaft (7), and with a clutch (8) for coupling the starter generator (6) to the internal combustion engine (2), wherein the clutch (8) is supported by centrifugal force,
**characterized**
**in that** the clutch (8) comprises, as mechanical components, a first disc (9) which is connected in a rotationally fixed fashion to the input shaft (5), a second disc (10), friction wedges (11) for connecting the first disc (9) in a frictionally locking fashion to the second disc (10), springs (12) and stud bolts (13).

2. Drive unit (1) according to Claim 1,
**characterized**
**in that** each friction wedge (11) is supported on the input shaft (5) via springs (12) and stud bolts (13).

3. Drive unit (1) according to Claim 2,
**characterized**
**in that** the friction wedge (11), the springs (12) and the stud bolts (13) interact in such a way that, when the rotational speed of the input shaft (5) is below a rotational speed limiting value (nGW), the friction wedges (11) are not in frictional engagement with the first disc (9) and the second disc (10).

4. Drive unit (1) according to one of the preceding claims,
**characterized**
**in that** the clutch (8) comprises, as electromagnetic components, locationally fixed pull solenoids (14) for generating an electromagnetic field and magnetisable segments (15).

5. Drive unit (1) according to Claim 4,
**characterized**
**in that** each friction wedge (11) is fitted with a segment (15) on the outer circumference.

6. Drive unit (1) according to Claims 4 and 5,
**characterized**
**in that** the pull solenoids (14) and the segments (15) interact in such a way that, when the pull solenoids (14) are energised, the force effect of the springs (12) is cancelled and the friction wedge (11) is placed in engagement with the first disc (9) and the second disc (10).

7. Drive unit (1) according to one of the preceding claims,
**characterized**
**in that** a rotor (16) of the starter generator (6) is connected in a rotationally fixed fashion to the output shaft (7) and to the clutch (8) via a metal-elastic coupling (18).

8. Method for controlling a drive unit (1) which is embodied according to Patent Claims 1 to 7,
**characterized**
**in that**, in order to start the internal combustion engine (2), the starter generator (6) and the pull solenoids (14) are activated, as a result of which the starter generator (6) is coupled to the internal combustion engine (2) via the clutch (8), and when a rotational speed limiting value (nGW) of the internal combustion engine (2) is reached the pull solenoids (14) are deactivated, and at the transition from the internal-combustion-engine mode into the electric-motor mode the rotational speed of the internal combustion engine (2) is lowered as far as the rotational speed limiting value (nGW) in a first step, as a result of which the clutch (8) opens, and in a second step the starter generator (6) is activated, and in order to restart the internal combustion engine (2) when the electric-motor mode is activated the rotational speed of the starter generator (6) is lowered to the rotational speed limiting value (nGW) in a first step, and in a second step the pull solenoids (14) are energized, as a result of which the clutch (8) closes, and when the internal combustion engine (2) has reached the rotational speed limiting value (nGW) the pull solenoids (14) are deactivated in a third step.

## Revendications

1. Unité d'entraînement (1) pour un véhicule hybride pour accoupler un moteur à combustion interne (2) et/ou un moteur électrique (3) à une transmission (4), avec un arbre d'entrée (5), qui est connecté de manière solidaire en rotation au moteur à combustion interne (2), avec un générateur-démarreur (6), qui sert en même temps de moteur électrique (3), avec un arbre de sortie (7) qui est connecté de manière solidaire en rotation à la transmission (4), le générateur-démarreur (6) ainsi que le moteur à combustion interne (2) agissant sur l'arbre de sortie (7), et avec un embrayage (8) pour l'accouplement du générateur-démarreur (6) au moteur à combustion interne (2), l'embrayage (8) étant assisté par la force centrifuge,
**caractérisée en ce que**
l'embrayage (8) comprend, en tant que composants mécaniques, un premier disque (9), qui est connecté de manière solidaire en rotation à l'arbre d'entrée (5), un deuxième disque (10), des clavettes de friction (11) pour la connexion par engagement par friction du premier disque (9) au deuxième disque (10), des ressorts (12) et des boulons filetés (13).

2. Unité d'entraînement (1) selon la revendication 1,
**caractérisée en ce que**
chaque clavette de friction (11) s'appuie par le biais de ressorts (12) et de boulons filetés (13) sur l'arbre d'entrée (5).

3. Unité d'entraînement (1) selon la revendication 2,
**caractérisée en ce que**
la clavette de friction (11), les ressorts (12) et les boulons filetés (13) coopèrent de manière à ce que, dans le cas d'une vitesse de rotation de l'arbre d'entrée (5) en dessous d'une valeur limite de vitesse de rotation (nGW), les clavettes de friction (11) ne soient pas en engagement par friction avec le premier disque (9) et le deuxième disque (10).

4. Unité d'entraînement (1) selon l'une quelconque des revendications précédentes,
**caractérisée en ce que**
l'embrayage (8) comprend, en tant que composants électromagnétiques, des aimants de traction fixes (14) pour produire un champ électromagnétique et des segments aimantables (15).

5. Unité d'entraînement (1) selon la revendication 4,
**caractérisée en ce que**
chaque clavette de friction (11) porte sur sa périphérie extérieure un segment (15).

6. Unité d'entraînement (1) selon les revendications 4 et 5,
**caractérisée en ce que**
les aimants de traction (14) et les segments (15) coopèrent de telle sorte que dans le cas d'une alimentation en courant à travers les aimants de traction (14), l'effet de force des ressorts (12) soit supprimé et la clavette de friction (11) soit amenée en prise avec le premier disque (9) et le deuxième disque (10).

7. Unité d'entraînement (1) selon l'une quelconque des revendications précédentes,
**caractérisée en ce que**
qu'un rotor (16) du générateur-démarreur (6) est connecté de manière solidaire en rotation à l'arbre de sortie (7) et par le biais d'un embrayage élastique en métal (18) à l'embrayage (8) .

8. Procédé de commande d'une unité d'entraînement (1) réalisée selon les revendications 1 à 7,
**caractérisé en ce que**
pour le démarrage du moteur à combustion interne (2), le générateur-démarreur (6) et les aimants de traction (14) sont activés, de sorte que le générateur-démarreur (6) soit accouplé par le biais de l'embrayage (8) au moteur à combustion interne (2), et à l'obtention d'une valeur limite de vitesse de rotation (nGW) du moteur à combustion interne (2), les aimants de traction (14) sont désactivés, lors de la transition du mode de moteur à combustion interne au mode de moteur électrique, dans une première étape, la vitesse de rotation du moteur à combustion interne (2) est abaissée jusqu'à la valeur limite de vitesse de rotation (nGW), de sorte que l'embrayage (8) s'ouvre, et dans une deuxième étape, le générateur-démarreur (6) est activé, pour redémarrer le moteur à combustion interne (2) lorsque le mode de moteur électrique est activé, dans une première étape la vitesse de rotation du générateur-démarreur (6) est abaissée à la valeur limite de vitesse de rotation (nGW), dans une deuxième étape les aimants de traction (14) sont parcourus par un courant, de sorte que l'embrayage (8) se ferme, et quand le moteur à combustion interne (2) a atteint la valeur limite de vitesse de rotation (nGW), dans une troisième étape, les aimants de traction (14) sont désactivés.
